# EUROPEAN PATENT APPLICATION

(11) **EP 4 595 755 A1**
(43) Date of publication of application: **06.08.2025**
(21) Application number: 23872587.3
(22) Date of filing: 29.09.2023
(51) Int. Cl.: A01N 43/72, A01N 37/46, A01N 43/16, A01N 43/40, A01N 57/12, A01P 13/00, A01P 21/00, C05C 11/00, C05G 3/50

(54) **COMPOSITION FOR ENHANCING EFFECT OF ACTIVE SUBSTANCE**

(30) Priority: 30.09.2022 JP 2022158075
(71) Applicant: Kaneka Corporation, Osaka-shi, Osaka 530-8288 (JP)
(72) Inventor: ASADA, Takayuki, Iwata-shi, Shizuoka 438-0802 (JP); YAMANE, Hiroaki, Iwata-shi, Shizuoka 438-0802 (JP); NOJIRI, Masutoshi, Iwata-shi, Shizuoka 438-0802 (JP)
(74) Representative: Hoffmann Eitle
(86) International application number: PCT/JP2023/035582
(87) International publication number: WO 2024/071367

(57) **Abstract**

This invention provides a composition that is used in combination with a useful substance to allow a plant to efficiently absorb the useful substance and potentiate the effects thereof. The composition for potentiating effects of a useful substance in a plant comprising at least one type of a biosurfactant selected from among peptide-based biosurfactants and sugar-based biosurfactants and a phospholipid is applied to a plant separately from the useful substance or as a mixture with the useful substance.

## Description

### Technical Field

The present disclosure relates to a composition for potentiating effects of a useful substance.

### Background Art

As a method for applying a useful component associated with plant growth to plants, a method for spraying a composition comprising a useful component on leaves is extensively used. Application of a useful component to, for example, soils, water, or seeds is known in addition to foliar application, and foliar application is advantageous in terms of rapid absorption of a useful component by the aboveground part. In the case of foliar application, a useful component is required to permeate the membrane on the leaf surface, although membrane permeability of a useful component is not always high. Thus, attempts have been made to enhance membrane permeability of a useful component.

Patent Literature 1 discloses an agricultural and horticultural bactericidal composition comprising, as active ingredients, Prumycin known as an agent exerting effects against gray mold, sclerotial disease, powdery mildew, and the like and surfactin known as a substance having surfactant activity. Use of Prumycin in combination with surfactin is reported to have potentiated the effects of Prumycin for pathogen control.

Non-Patent literature 1 reports that, concerning a bactericidal compound incapable of permeating a bacterial cell membrane, use of a liposome generated from a rhamnolipid as a biosurfactant in combination with the bactericidal compound inhibited bacterial proliferation to a significant extent.

### Citation List

### Patent Literature

Patent Literature 1: WO 2018/029775

### Non-Patent Literature

Non-Patent Literature 1: B. C. P. Sanches, et al., Int. J. Nanomedicine, 2021, 16, pp. 925-939

### Summary of Invention

### Technical Problem

The present disclosure provides a composition that is used in combination with a useful substance to allow a plant to efficiently absorb the useful substance and potentiate the effects thereof.

### Solution to Problem

The present application discloses one or more inventions described below.
[1] A composition for potentiating effects of a useful substance in a plant, which comprises at least one type of a biosurfactant selected from among peptide-based biosurfactants and sugar-based biosurfactants and a phospholipid.
[2] The composition for potentiating effects of a useful substance according to [1], which comprises the biosurfactant in an amount of 0.001 to 0.1% by mass based on 100% by mass of the composition.
[3] The composition for potentiating effects of a useful substance according to [1] or [2], which comprises the phospholipid in an amount of 0.0005 to 0.1% by mass based on 100% by mass of the composition.
[4] The composition for potentiating effects of a useful substance according to any of [1] to [3], wherein the ratio of the content of the biosurfactant to the content of the phospholipid is 1:0.01 to 1:5 by mass.
[5] The composition for potentiating effects of a useful substance according to any of [1] to [4], wherein the useful substance is an organic compound, which is at least one substance selected from the group consisting of a herbicide, a plant growth regulator, a functional fertilizer component, a bactericide, and a pesticide.
[6] The composition for potentiating effects of a useful substance according to [5], wherein the useful substance is glutathione.
[7] The composition for potentiating effects of a useful substance according to any of [1] to [6], which further comprises a useful substance.
[8] The composition for potentiating effects of a useful substance according to any of [1] to [7], wherein the biosurfactant is at least one biosurfactant selected from among surfactin, rhamnolipid, sophorolipid, and a salt of any thereof.
[9] The composition for potentiating effects of a useful substance according to any of [1] to [8], which is used for foliar application.
[10] A precursor composition of a composition for potentiating effects of a useful substance, which is used for preparing the composition for potentiating effects of a useful substance according to any of [1] to [8] by dilution or mixing.
[11] The precursor composition according to [10], which comprises the biosurfactant in an amount of 0.5 to 50% by mass based on 100% by mass of the precursor composition.
[12] The precursor composition according to [10] or [11], which comprises the phospholipid in an amount of 0.05 to 50% by mass based on 100% by mass of the precursor composition.

The description incorporates the contents disclosed by JP Patent Application No. 2022-158075, based on which the priority of the present application claims.

### Advantageous Effects of Invention

The composition for potentiating effects of a useful substance of the present disclosure is used in combination with a useful substance to allow a plant to efficiently absorb the useful substance and potentiate the effects thereof.

### Brief Description of Drawings

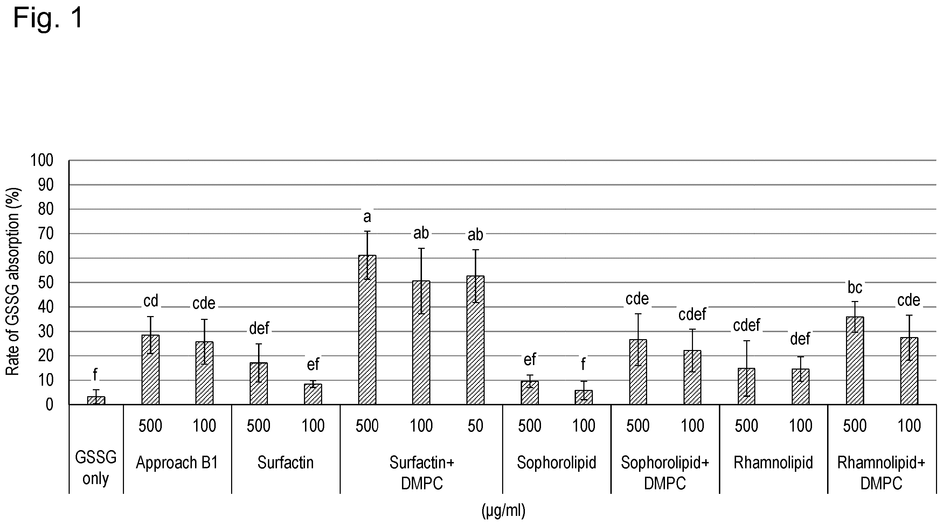

[Figure 1] Figure 1 shows the rate of GSSG absorption by leaves to which the test solutions of Text Example 1-1 were applied. The concentration shown in the figure indicates the concentration of a surfactant. In the figure, the alphabet characters "a" to "f" demonstrate that there was a significant difference between groups each indicated with a different alphabet character (Tukey's test: p < 0.05).

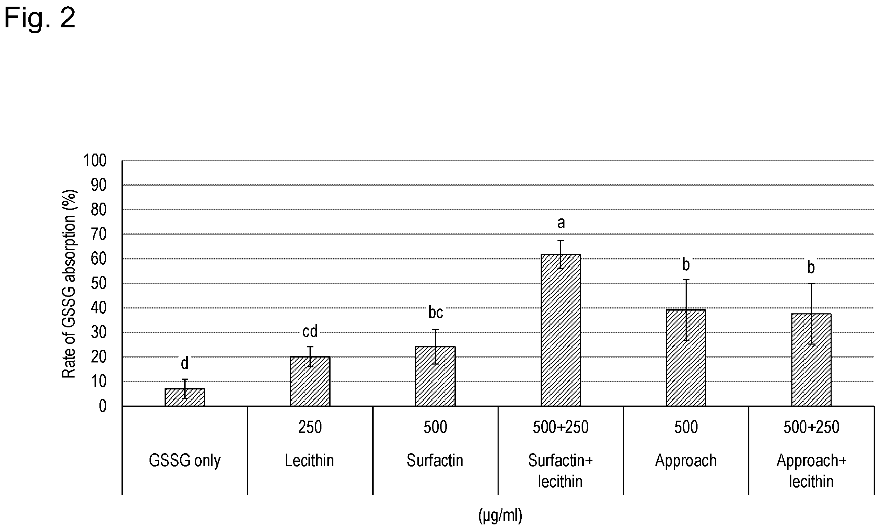

[Figure 2] Figure 2 shows the rate of GSSG absorption by leaves to which the test solutions of Text Example 1-2 were applied. In the figure, the alphabet characters "a" to "d" demonstrate that there was a significant difference between groups each indicated with a different alphabet character (Tukey's test: p < 0.05).

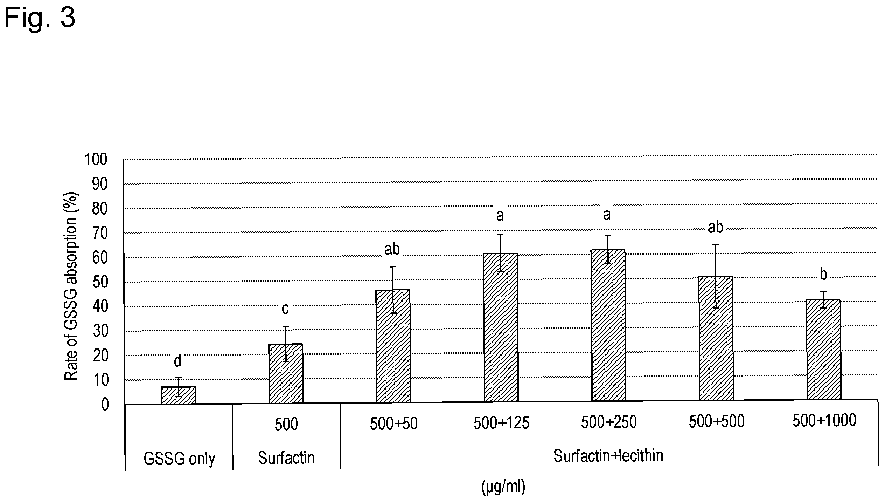

[Figure 3] Figure 3 shows the rate of GSSG absorption by leaves to which the test solutions of Text Example 1-3 were applied. In the figure, the alphabet characters "a" to "d" demonstrate that there was a significant difference between groups each indicated with a different alphabet character (Tukey's test: p < 0.05).

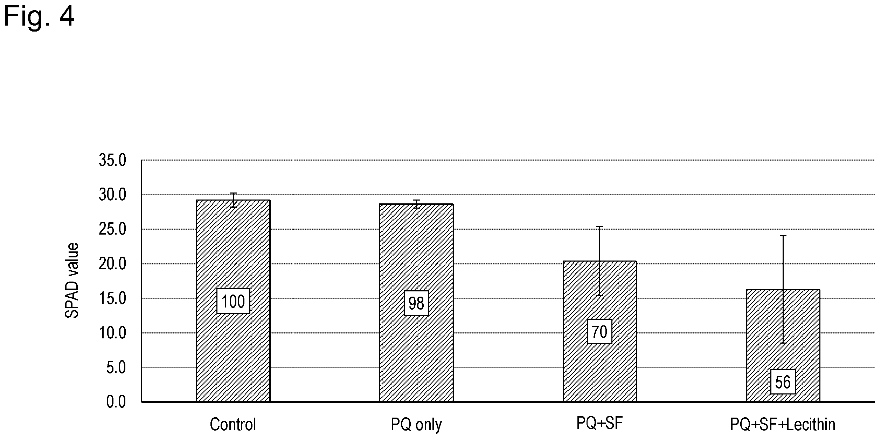

[Figure 4] Figure 4 shows the SPAD values of the leaves to which the test solutions of Text Example 2-1 were applied.

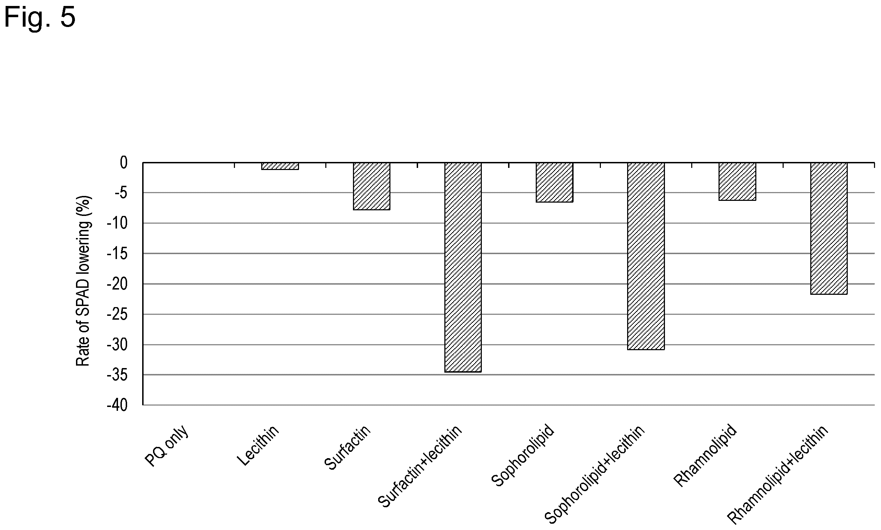

[Figure 5] Figure 5 shows a rate of SPAD decrease of the leaves to which the test solutions of Text Example 2-2 were applied. The SPAD value of the leaves to which PQ had been selectively applied is designated as 100, and a rate of SPAD decrease of the leaves to which the test solutions were applied is shown relative thereto.

### Description of Embodiments

Hereafter, the present invention is described in detail.

### 1. Composition for potentiating effects of useful substance

The first embodiment of the present disclosure relates to a composition for potentiating effects of a useful substance, which comprises at least one type of a biosurfactant selected from among peptide-based biosurfactants and sugar-based biosurfactants, and a phospholipid.

The composition for potentiating a useful substance of the present embodiment (hereafter, may be referred to as the "composition of the present embodiment") comprises a biosurfactant and a phospholipid as described above. When the composition of the present embodiment is applied to plants together with a useful substance, the effect of the useful substance is more potentiated, compared with the effect achieved with the use of a biosurfactant or phospholipid by itself. Accordingly, the composition of the present embodiment enables a useful substance to exert an effect of interest in a smaller amount and further reduces a burden imposed on the environment due to the use of the useful substance.

### <Plant>

In the present disclosure, "plants" are not particularly limited, and crop plants are preferable. Examples of crop plants include *Zea mays* (e.g., corn or maize), wheat, barley, rye, oat, rice, soybean, canola (rapeseed), cotton, sunflower, sugar beet, potato, tobacco, broccoli, lettuce, cabbage, spinach, *Brassica chinensis komatsuna,* cauliflower, coconut, tomato, cucumber, eggplant, melon, pumpkin, okra, pimento, water melon, carrot, Japanese radish, onion, green onion, fruit-bearing trees, flowers and ornamental plants, turf grass, and pasture grass.

### <Biosurfactant>

The composition of the present embodiment comprises a biosurfactant. A biosurfactant may be at least one type of a biosurfactant selected from among peptide-based biosurfactants and sugar-based biosurfactants. The composition of the present embodiment may comprise a type of a biosurfactant by itself or two or more types of biosurfactants. Since the composition of the present embodiment comprises a biosurfactant, application thereof to plants promotes absorption of a useful substance. This can potentiate effects of a useful substance in plants. Use of a biosurfactant that is not derived from the yeast *Wickerhamomyces anomalus* is preferable from the viewpoint of odor and food hygiene.

A peptide-based biosurfactant is not particularly limited, provided that it has a peptide structure and surfactant ability. An example thereof is a lipopeptide biosurfactant. A lipopeptide biosurfactant has a hydrophobic group and a peptide comprising a hydrophilic portion, it exerts surfactant activity, and it is generated by microorganisms. Examples of lipopeptide biosurfactants include surfactin, arthrofactin, iturin, fengycin, serrawettin, lichenysin, viscocin, and a salt of any thereof.

A peptide-based biosurfactant is preferably at least one type of peptide-based biosurfactant selected from among surfactin and a salt thereof, and more preferably at least one type of peptide-based biosurfactant selected from among surfactin and a salt thereof. Surfactin and a salt of surfactin can be represented by general formula (1) below. Surfactin and a salt of surfactin may be used by itself or in combinations of two or more. 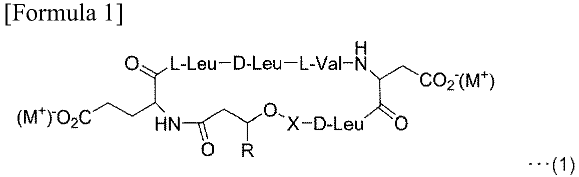 In Formula (1), X represents an amino acid residue selected from among leucine, isoleucine, and valine; R represents a C9-18 alkyl group; and M+ each independently represent a hydrogen ion (H+), an alkali metal ion, an ammonium ion, or a pyridinium ion.

When M+ represents a hydrogen ion, CO2-(M+) is a hydroxyl group (COOH group). When two M+ groups both represent hydrogen ions, the compound is surfactin. When at least one M+ represents an alkali metal ion, an ammonium ion, or a pyridinium ion, the compound is a salt of surfactin. A general formula representing surfactin is shown in Formula (1') below.

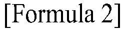

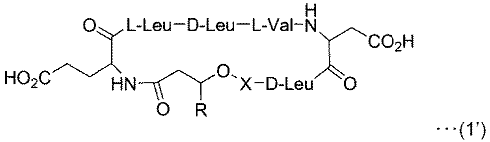

In Formula (1'), X and R are as defined in Formula (1) above.

While X represents an amino acid residue selected from among leucine, isoleucine, and valine, an amino acid residue may be in either an L-form or a D-form, with an amino acid residue in an L-form being preferable.

R represents a C9-18 alkyl group, which is a linear or branched monovalent saturated hydrocarbon group having 9 to 18 carbon atoms. Example of C9-18 alkyl groups includes n-nonyl, 6-methyloctyl, 7-methyloctyl, n-decyl, 8-methylnonyl, n-undecyl, 9-methyldecyl, n-dodecyl, 10-methylundecyl, n-tridecyl, 11-methyldodecyl, n-tetradecyl, n-pentadecyl, n-hexadecyl, n-heptadecyl, and n-octadecyl, with 10-methylundecyl being preferable.

M+ each independently represent a hydrogen ion (H+), an alkali metal ion, an ammonium ion, or a pyridinium ion. An alkali metal ion is not particularly limited, and examples thereof include a lithium ion, a sodium ion, and a potassium ion. An ammonium ion is not particularly limited, and an example thereof is an ammonium ion represented by N(R1)4+. R1 each independently represent hydrogen or an organic group. A preferable form of an ammonium ion is a quaternary ammonium ion in which all R1 groups represent organic groups. Examples of organic groups include alkyl, aralkyl, and aryl groups. Specific examples of alkyl groups include C1-10 alkyl groups, such as methyl, ethyl, n-propyl, isopropyl, n-butyl, and t-butyl. Specific examples of aralkyl groups include C7-12 aralkyl groups, such as benzyl, methylbenzyl, and phenylethyl. Specific examples of aryl groups include C6-15 aryl groups, such as phenyl, toluyl, and xylyl. Examples of ammonium ions include a tetramethylammonium ion and a tetraethylammonium ion. A pyridinium ion is not particularly limited. In a pyridinium ion, a hydrogen atom binding to a carbon atom that constitutes a pyridine ring may be substituted with an organic group. In a pyridinium ion, for example, hydrogen or an organic group may bind to N+ that constitutes a pyridine ring. As an organic group of a pyridinium ion, an organic group exemplified with regard to R1 may adequately be used.

The two M+ present in the general formula (1) may be the same as or different from one another. As one preferred aspect of the two M+ present in the general formula (1), for example, some of M+ are hydrogen ions, and some of M+ are alkali metal ions. The alkali metal ion is not particularly limited and may be a lithium ion, sodium ion, potassium ion, or the like. When the two M+ present in the general formula (1) are of two or more kinds of ions, the two M+ may be the same kind of ions in a case where one molecule (salt) is focused on. When M+ are of two kinds of ions, the ratio (molar ratio) of one ion A to one ion B is, for example, 1:10 to 10:1, preferably 1:5 to 5:1, and more preferably 1:3 to 3:1. As one preferred aspect, some of the two M+ present in the general formula (1) is a hydrogen ion, and some of the two M+ is a sodium ion (Na+).

A peptide-based biosurfactant, such as surfactin or a surfactin salt, can be obtained in accordance with a conventional technique by, for example, culturing microorganisms, such as strains of *Bacillus subtilis* and separating surfactin or a surfactin salt from the culture solution. Surfactin or a salt thereof may be purified and used, or it may be used in an unpurified state in the form of, for example, a culture solution. Surfactin or a salt thereof that is obtained by chemical synthesis can also be used, provided that it has the same molecular structure. Alternatively, a commercially available product can be used.

A sugar-based biosurfactant is not particularly limited, provided that it has a glycolipid structure and has a surfactant ability. Examples thereof include rhamnolipids, sophorolipids, mannosylerythritol lipids, cellobiose lipids, trehalose lipids, succinoyl trehalose lipids, glucose lipids, polyol lipids, oligosaccharide fatty acid esters, and salts of any thereof.

A sugar-based biosurfactant is preferably at least one sugar-based biosurfactant selected from among rhamnolipids, sophorolipids, and salts thereof, and more preferably at least one sugar-based biosurfactant selected from among rhamnolipids, sophorolipids, and salts thereof.

A sugar-based biosurfactant can be obtained in accordance with a conventional technique. Alternatively, a commercially available product can be used.

In a particularly preferable aspect, the biosurfactant is at least one biosurfactant selected from among surfactin, a rhamnolipid, a sophorolipid, and a salt of any thereof.

### <Phospholipid>

The composition of the present embodiment comprises a phospholipid. An example of a phospholipid is lecithin. Lecithin is another name of phosphatidylcholine, and it is roughly classified as naturally occurring lecithin or synthetic lecithin. Naturally occurring lecithin is a phospholipid from nature that comprises a large quantity of phosphatidylcholine. For example, egg yolk-derived lecithin is referred to as "egg-yolk lecithin," and soybean-derived lecithin is referred to as "soybean lecithin." Examples of synthetic lecithin include dimyristoylphosphatidylcholine (DMPC) and dipalmitoylphosphatidylcholine (DPPC). The term "lecithin" used herein encompasses both of naturally occurring lecithin and synthetic lecithin.

Examples of phospholipids other than lecithin include: glycerophospholipids, such as phosphatidic acid, bisphosphatidic acid, phosphatidylserine, phosphatidylethanolamine, phosphatidylmethylethanolamine, phosphatidylinositol, phosphatidylglycerol, and diphosphatidylglycerol; sphingophospholipids, such as sphingosine, ceramide, sphingomyelin, and cerebroside; and hydrogenated lecithin, such as hydrogenated soybean phospholipid and hydrogenated egg yolk lecithin.

At least one phospholipid selected from among phosphatidylcholine, hydrogenated lecithin, phosphatidic acid, bisphosphatidic acid, phosphatidylethanolamine, phosphatidylmethylethanolamine, phosphatidylserine, phosphatidylinositol, phosphatidylglycerol, diphosphatidylglycerol, and sphingomyelin can be preferably used.

### <Agriculturally acceptable carrier>

The composition of the present embodiment comprises an agriculturally acceptable carrier. **In** the present disclosure, an "agriculturally acceptable carrier" may be any carrier, provided that it can hold the biosurfactant described above, and it may be a liquid carrier or a solid carrier. An example of a solid carrier is a hydrous solid substance. A solid carrier may be in the form of powder or granule.

An "agriculturally acceptable carrier" is preferably a liquid carrier, such as water or an organic solvent. Water as a carrier is not limited to pure water, it may be an aqueous solution, an aqueous suspension, aqueous gel, or aqueous slurry, and a viscous substance may be used. An organic solvent is not limited to a pure organic solvent, and it may be an organic solvent-based solution, suspension, gel, or slurry, and a viscous substance may be used. Examples of organic solvents include methyl ether, ethyl ether, propyl ether, and butyl ether.

An agriculturally acceptable carrier is preferably a liquid carrier, such as water or an aqueous solution comprising a hydrous substance dissolved in water, or a solid carrier comprising a water-soluble hydrous substance. Examples of hydrous substances include polyvinylpyrrolidone, alkylene oxide random/block copolymers, a vinyl acetate/vinylpyrrolidone copolymer, an alkylated vinylpyrrolidone copolymer, polyalkylene glycol including polypropylene glycol and polyethylene glycol, polyvinyl acetate, polyvinyl alcohol, gelatin, agar, gum Arabic, gum karaya, gum tragacanth, guar gum, Locust bean gum, xanthan gum, ghatti gum, carragheenan, alginate, casein, dextran, pectin, chitin, 2-hydroxyethyl starch, 2-aminoethyl starch, 2-hydroxyethylcellulose, methylcellulose, carboxymethylcellulose salt, cellulose sulfate, polyacrylamide, alkali metal salt of a maleic anhydride copolymer, and alkali metal salt of poly(meth)acrylate.

### <Additive>

The composition of the present embodiment may further comprise, as additives, components other than the biosurfactant, the phospholipid, and the agriculturally acceptable carrier, according to need. The composition of the present embodiment may comprise one or more additives. Examples of additives include, but are not limited to, a moisturizing agent, a colorant, a defoaming agent, an UV protective agent, an antifreezing agent, a preservative, a biological control agent or biocide, an emulsifier, an extender, a scavenger, a plasticizer, a fluidizing agent, a coalescing agent, wax, and/or a filler (e.g., cray, talc, glass fiber, cellulose, and pulverized wood material).

### <Useful substance>

The composition of the present embodiment is applied to plants together with a useful substance or as a mixture with a useful substance. The term "useful substance" used herein refers to a substance other than water, which can directly or indirectly exert activity of interest on plant growth, and the term preferably refers to an organic compound. A useful substance may be applied to plants separately from the composition of the present embodiment. For example, a useful substance may be incorporated into another composition and applied to plants in that state (the first aspect). A useful substance may be mixed with a precursor composition (described below) immediately before use and applied to plants (the second aspect). Alternatively, the composition of the present embodiment may be supplemented with a useful substance in advance (the third aspect). In the second aspect and the third aspect, it is preferable that the useful substance be comprised in an amount that would effectively influence plant growth. Examples of useful substances that can be used include a herbicide, a plant growth regulator, a functional fertilizer component (biostimulant), a bactericide, and a pesticide. When the composition of the present embodiment is used in combination with such useful substance (an organic compound, in particular) or as a mixture therewith, absorption of the useful substance by a plant can be promoted, and the effects of the useful substance can be potentiated.

Examples of herbicides that can be used include, but are not particularly limited to: phenoxy acid herbicides, such as 2,4-PA, MCPA, MCPB, MCPP, triclopyr, clomeprop, naproanilide, cyhalofop-butyl, fluazifop, quizalofop-ethyl, and fluazifop P; carbamate herbicides, such as IPC, phenmedipham, desmedipham, benthiocarb, orthobencarb, esprocarb, molinate, dimepiperate, and pyributicarb; acid amide herbicides, such as DCPA, alachlor, butachlor, pretilachlor, metolachlor, dimethylamide, thenylchlor, bromobutide, etobenzanid, diflufenican, mefenacet, napropamide, cafenstrole, propyzamide, isoxaben, and asulam; urea herbicides, such as DCMU, linuron, siduron, dymron, methyldymron, cumyluron, karbutilate, isouron, and tebuthiuron; sulfonylurea herbicides, such as bensulfuron-methyl, ethoxysulfuron, pyrasulfuron-ethyl, azimsulfuron, halosulfuron-methyl, flazasulfuron, cinosulfuron, nicosulfuron, rimsulfuron, thifensulfuron-methyl, imazosulfuron, metsulfuron-methyl, cyclosulfamuron, florasulam, and trifloxysulfuron sodium salt; pyrimidyloxy benzoic acid herbicides, such as pyriminobac-methyl and bispyribac-sodium salt; triazine herbicides, such as CAT, atrazine, simetryn, ametryn, prometryn, dimethametryn, cyanazine, triaziflam, metribuzin, and metamitron; diazinon herbicides, such as terbacil, bromacil, lenacil, PAC, bentazon, and dazomet; diazole herbicides, such as pyrazolate, pyrazoxyfen, and benzofenap; bipyridinium herbicides, such as paraquat and diquat; dinitroaniline herbicides, such as trifluralin, bethrodine, prodiamine, pendimethalin, and oryzalin; aromatic carboxylic acid herbicides, such as MDBA, imazapyr, imazaquin, imazaquin ammonium salt, dithiopyr, TCTP, and imazamox ammonium salt; fatty acid herbicides, such as DPA and tetrapion; organic phosphorus herbicides, such as amiprophos-methyl, butamifos, SAP, and anilofos; amino acid herbicides, such as glyphosate, bialaphos, and glufosinate; and other herbicides, such as ioxynil, bifenox, DBN, DCBN, sethoxydim, clethodim, tepraloxydim, ACN, chlorphthalim, flumioxazin, cinmethylin, carfentrazone-ethyl, endothal disodium salt, benfuresate, pentoxazone, pyraflufen-ethyl, carbam, oxaziclomefone, indanofan, fentrazamide, benzobicyclon, butafenacil, azafenidin, pyriftalid, fluthiacet-methyl, oxadiargyl, oxadiazon, and decyl alcohol. **In** general, herbicides are used to inhibit unnecessary plant growth in croplands and the like. Application of herbicides in combination with the composition of the present embodiment (or herbicides comprised in the composition) enables inhibition of such plant growth in a smaller amount thereof. This can lower a risk of soil contamination or inhibition of crop growth caused by herbicides remining in soil.

Examples of plant growth regulators that can be used include, but are not particularly limited to: ethylene; auxins, such as indolebutyric acid, ethychlozate, cloxyfonac, dichlorprop, 1-naphthylacetamide, and 4-CPA; an auxin antagonist, such as maleic hydrazide; cytokinines, such as benzylaminopurine and forchlorfenuron; gibberellin; growth retardants, such as inabenfide, luliconazole P, chlormequat, paclobutrazol, flurprimidol, mepiquat chloride, prohexadione calcium salt, trinexapac-ethyl, daminozide, and imazapyr; and other agents, such as isoprothiolane, oxine-sulfate, cyanamide, choline, decyl alcohol, piperonyl butoxide, pendimethalin, MCPA, MCPB, NAC, quinoxaline-DEP, pyraflufen-ethyl, prohydrojasmon, abscisic acid, chlorella extract, and *shiitake* mushroom hypha extract. In general, plant growth regulators are used to increase an yield or the like upon cultivation of crops or the like. Application of plant growth regulators in combination with the composition of the present embodiment (or plant growth regulators comprised in the composition) enables achievement of the effects of interest in a smaller amount.

The term "functional fertilizer" used herein encompasses a substance that is classified as a "biostimulant," and the term refers to a substance that enhances resistance to abiotic stress and is intended to improve the growth and the quality as a consequence. More specifically, the term "functional fertilizer" refers to a fertilizer comprising components having functions of influencing the plant growth, such as functions of inhibiting active oxygen, improving the photosynthetic capacity of plants, promoting flowering or fruit production, regulating transpiration, controlling the osmotic pressure, improving the rhizosphere environment, increasing the amount of roots, or promoting rooting. The term "functional fertilizer component" refers to a component having such functions. Examples of functional fertilizer components that can be used include: peptides, such as glutathiones (oxidized glutathione and reduced glutathione) and soybean peptide; amino acids, such as 5-aminolevulinic acid, glycine betaine, and methionine; saccharides, such as oligosaccharide (e.g., raffinose), trehalose, and polysaccharides (e.g., alginic acid); seaweed extracts; humic substances; organic acids; nucleic acids; plant extracts; and microbial metabolites. In general, a functional fertilizer is used for the purpose of, for example, yield increase in crop cultivation. Application of a functional fertilizer in combination with the composition of the present embodiment (or a functional fertilizer comprised in the composition) enables achievement of the effects of interest in a smaller amount thereof.

Examples of bactericides that can be used include, but are not particularly limited to: copper bactericides, such as organic copper, copper nonylphenolsulfonate, and DBEDC; organic sulfur bactericides, such as zineb, maneb, manzeb, ambam, polycarbamate, propineb, ziram, thiuram, and thiadiazine; organic phosphorus bactericides, such as IBP, EDDP, triclofos-methyl, and fosetyl; a chlorinated organic compound, such as TPV; melanin biosynthesis inhibitors, such as fthalide, tricyclazole, pyroquilon, and carpropamid; benzimidazole bactericides, such as thiophanate-methyl, benomyl, and thiabendazole; dicarboximide bactericides, such as iprodione and procymidone; acid amide bactericides, such as mepronil, flutolanil, furametpyr, thifluzamide, metalaxyl, oxadixyl, fenhexamid, and fenoxanil; sterol biosynthesis inhibitors, such as triadimefon, bitertanol, myclobutanil, hexacosanol, tebuconazole, propiconazole, difenoconazole, ipconazole, imibenconazole, cyproconazole, triflumizole, prochloraz, pefurazoate, fenarimol, pyriphenox, triforine, tetraconazole, oxpoconazole fumarate, fenbuconazole, and simeconazol; methoxy-acrylate bactericides, such as azoxystrobin, kresoxim-methyl, metominostrobin, trifloxystrobin, and famoxadone; anilinopyrimidine bactericides, such as mepanipyrim, cyprodinil, and pyrimethanil; synthetic antibacterial agents, such as tecloftalam and oxolinic acid; soil bactericides, such as flusulfamide, hydroxyisoxazole, echlomezol, dazomet, chloroneb, methasulfocarb, methyl isothiocyanate, D-D, methyl bromide, chloropicrin, carbam, and carbam sodium salt; antibiotic bactericides, such as streptomycin, oxytetracycline, blasticidin S, kasugamycin, polyoxin, validamycin, and mildiomycin; natural bactericides, such as machine oil and rapeseed oil; probenazole; isoprothiolane; ferimzone; diclomezine; pencycuron; fluoroimide; captan; sulfenic acid; dithianon; quinoxaline; diflumetorim; fludioxonil; benthiazole; acibenzolar-S-methyl; triazine; fluazinam; diethofencarb; cymoxanil; iminoctadine acetate; iminoctadine albesilate; propamocarb hydrochloride; dimethomorph; diclocymet; famoxadone; cyazofamid; cyflufenamid; and thiazinyl. A bactericide is used to prevent agricultural crops from being infected with pathogens. Application of a bactericide in combination with the composition of the present embodiment (or a bactericide comprised in the composition) enables achievement of the effects of interest in a smaller amount thereof.

Examples of pesticides that can be used include: organic phosphorus pesticides, such as CYAP, MPP, MEP, ECP, pirimiphos-methyl, diazinon, quinalphos, isoxathion, pyridaphenthion, chlorpyrifosmethyl, chlorpyrifos, malathon, PAP, dimethoate, ethylthiomethon, phosalone, PMP, DMPT, prothiofos, sulprofos, profenofos, pyraclofos, DDVP, monocrotophos, BRP, CVMP, dimethylvinphos, CVP, propaphos, acephate, isofenphos, DEP, EPN, and ethion; carbamate pesticides, such as NAC, MIPC, BPMC, PHC, XMC, ethiofencarb, carbosulfan, benfuracarb, furathiocarb, methomyl, oxamyl, thiodicarb, and alanycarb; pyrethroid pesticides, such as allethrin, resmethrin, permethrin, cypermethrin, cyfluthrin, cyhalothrin, tralomethrin, fenpropathrin, bifenthrin, fenvalerate, esfenvalerate, flucythrinate, fluvalinate, acrinathrin, cycloprothrin, etofenprox, silafluofen, and tefluthrin; nereistoxin pesticides, such as cartap, thiocyclam, and bensultap; neonicotinoid pesticides, such as imidacloprid, acetamiprid, nitenpyram, thiacloprid, thiamethoxam, dinotefuran, and clothianidin; insect growth inhibitors, such as buprofezin, isoprothiolane, diflubenzuron, diflubenzuron, hexaflumuron, lufenuron, flufenoxuron, chlorfluazuron, tebufenozide, chromafenozide, cyromazine, methoxyfenozide, and pyriproxyfen; natural pesticides, such as pyrethrum, derris, nicotine sulfate, machine oil, rapeseed oil, starch, fatty acid glyceride, and diatomaceous earth; acaricides/miticides, such as kelthane, phenisobromolate, tetradifon, BPPS, quinoxaline, amitraz, fenothiocarb, hexythiazox, fenbutatin oxide, dienochlor, fenpyroximate, tebufenpyrad, fluazinam, pyridaben, pyrimidifen, clofentezine, etoxazole, halfenprox, milbemectin, bialaphos, acequinocyl, bifenazate, propylene glycol fatty acid monoester, fluacrypyrim, and spirodiclofen; nematicides, such as D-D, DCIP, methylisothiocyanate, dazomet, benomyl, fosthiazate, oxamyl, pyraclofos, carbam, carbam sodium salt, and cadusafos; control agents for pine wilt disease, such as pinene oil, carbam, carbam sodium salt, MEP, MPP, pyridafenthion, prothiofos, malathon, NAC, acetamiprid, thiacloprid, mesulfenfos, morantel tartrate, levamysol hydrochloride, nemadectin, emamectin benzoate, and milbemectin; control agents for slugs, such as metaldehyde; benzoepin; fipronil; chlorphenapyr; diafenthiuron; pymetrozine; emamectin benzoate; sodium oleate; DBEDC; indoxacarb; and tolfenpyrad. A pesticide is used to prevent agricultural crops from being ruined by pests. Application of a pesticide in combination with the composition of the present embodiment (or a pesticide comprised in the composition) enables achievement of the effects of interest in a smaller amount thereof.

### <Composition for potentiating effects of useful substance>

As described above, the composition for potentiating effects of a useful substance of the present embodiment comprises at least one type of a biosurfactant selected from among peptide-based biosurfactants and sugar-based biosurfactants and a phospholipid.

The composition of the present embodiment preferably comprises the biosurfactant in an amount of 0.001 to 0.1% by mass, and particularly preferably 0.005 to 0.05% by mass, based on 100% by mass of the composition. The composition of the present embodiment may be transferred and stored in the form of a composition such as a concentrate or powder (may be referred to as a "precursor composition," which is described in detail below). At the time of application to plants, the composition may be diluted with water or a diluent or mixed with a composition comprising a useful substance, so as to adjust the content of the biosurfactant to the range indicated above. In such a case, the content of the biosurfactant in the concentrate or powder can be adequately determined in accordance with the dilution factor, the mixing ratio, or other conditions.

The composition of the present embodiment preferably comprises the phospholipid in an amount of 0.0005 to 0.1% by mass, and particularly preferably 0.001 to 0.05% by mass, based on 100% by mass of the composition. The composition of the present embodiment may be transferred and stored in the form of a precursor composition. At the time of application to plants, the composition may be diluted with water or a diluent or mixed with a composition comprising a useful substance, so as to adjust the content of the phospholipid to the range indicated above. In such a case, the content of the phospholipid in the concentrate or powder can be adequately determined in accordance with the dilution factor, the mixing ratio, or other conditions.

The composition of the present embodiment preferably comprises the biosurfactant and the phospholipid at a ratio of 1:0.01 to 1:5 by mass, and particularly preferably at a ratio of 1:0.1 to 1:2.0 by mass.

The composition of the present embodiment may comprise an agriculturally acceptable carrier, according to need. The composition of the present embodiment may comprise other additives, according to need. The composition of the present embodiment may comprise the useful substance, according to need.

A method for producing the composition of the present embodiment is not particularly limited. When a liquid carrier is used as an agriculturally acceptable carrier, for example, the liquid carrier may be supplemented with a biosurfactant, a phospholipid, and an optional additive, and the resultant may be agitated to obtain a homogeneous mixture. Alternatively, the liquid carrier may be supplemented with a useful substance, in addition to a biosurfactant, a phospholipid, and an optional additive, and the resultant may be agitated to obtain a homogeneous mixture.

In general, the composition of the present embodiment is applied to plants, such as leaves, roots, seeds, seedlings, or fruits of plants. In a preferable aspect, the composition of the present embodiment is applied to plant leaves. When the composition is "applied to plant leaves," the composition is applied at least to leaves, it may be applied to foliage, or it may be applied partially to flowers, fruits, or the like.

### 2. Method for application of composition for potentiating effects of useful substance to plants

The second embodiment of the present disclosure relates to a method for applying the composition of the first embodiment to plants (hereafter, may be referred to as "the method of the present embodiment"). The definitions of the terms used in the present embodiment are as defined in the first embodiment, unless there is any particular inconsistency.

In the method of the present embodiment, a composition for potentiating effects of a useful substance is primarily applied to plants in the aspects described below.

### First aspect:

A composition for potentiating effects of a useful substance that does not comprise a useful substance is applied. A useful substance or a composition comprising a useful substance is applied to the same plant separately from the composition for potentiating effects of a useful substance.

### Second aspect:

A composition for potentiating effects of a useful substance that comprises a useful substance is applied. A useful substance is mixed with a precursor composition of a composition for potentiating effects of a useful substance immediately before application.

### Third aspect:

A composition for potentiating effects of a useful substance that comprises a useful substance is applied. A useful substance is incorporated into a precursor composition of a composition for potentiating effects of a useful substance immediately before application, and a composition for potentiating effects of a useful substance is prepared by dilution.

### <First aspect>

In the first aspect of the present embodiment, a composition for potentiating effects of a useful substance that does not comprise a useful substance (hereafter, may be referred to as "Composition 1A") is applied to plants separately from a useful substance. A useful substance is incorporated in, for example, a composition different from Composition 1A (hereafter, may be referred to as "Composition 1B"), and Composition 1A and Composition 1B are applied to plants independently of each other. Composition 1A and Composition 1B may be applied at the same time or at different times. When Composition 1A and Composition 1B are applied at different times, Composition 1A may be applied before or after Composition 1B is applied. Alternatively, Composition 1A may be applied before and after Composition 1B is applied. Either Composition 1A or Composition 1B may be prepared by diluting a concentrated composition immediately before application to plants.

It is preferable that Composition 1A be sprayed on the aboveground part of a plant, and, in particular, on leaves. When Composition 1A is sprayed on the aboveground part of a plant, Composition 1A is sprayed, so that a biosurfactant is applied preferably in an amount of 2.5 to 100 g, and more preferably 5 to 50 g, relative to 10a of the plant cultivation area. Also, Composition 1A is sprayed, so that a phospholipid is applied preferably in an amount of 0.25 to 200 g, and more preferably 1.25 to 50 g, relative to 10a of the plant cultivation area.

Composition 1B is preferably applied to the site that is the same as the site to which Composition 1A has been applied. More specifically, it is preferable that Composition 1B be sprayed on the aboveground part of a plant, and, in particular, on leaves. When Composition 1B is sprayed on the aboveground part of a plant, Composition 1B is preferably applied, so that the effective amount of a useful substance comprised in the composition would be applied to leaves.

In the case of foliar application, the timing of spraying Composition 1A and the timing of spraying Composition 1B can be adequately changed in accordance with a type of a useful substance or a purpose of application.

### <Second aspect>

In the second aspect of the present embodiment, a precursor composition of a composition for potentiating effects of a useful substance that does not comprise a useful substance (hereafter, may be referred to as "Composition 2A") is mixed with a useful substance immediately before application to plants to prepare a composition for potentiating effects of a useful substance (hereafter, may be referred to as "Composition 2C"). A useful substance to be mixed may be a useful substance by itself or a composition comprising a useful substance (hereafter, may be referred to as "Composition 2B"). At least one of Composition 2A or Composition 2B may be prepared by diluting a concentrated composition immediately before mixing.

It is preferable that Composition 2C be sprayed on the aboveground part of a plant, and, in particular, on leaves. When Composition 2C is sprayed on the aboveground part of a plant, Composition 2C is sprayed, so that a biosurfactant is applied preferably in an amount of 2.5 to 100 g, and more preferably 5 to 50 g, relative to 10a of the plant cultivation area. Also, Composition 2C is sprayed, so that a phospholipid is applied preferably in an amount of 0.25 to 200 g, and more preferably 1.25 to 50 g, relative to 10a of the plant cultivation area. In addition, Composition 2C is preferably applied, so that the effective amount of a useful substance comprised in the composition would be applied to plants. It is preferable that Composition 2A be mixed with Composition 2B, so that the amounts of the biosurfactant, the phospholipid, and the useful substance to be applied to plants would be adjusted within the ranges indicated above simultaneously.

In the case of foliar application, the timing of spraying Composition 2C can be adequately changed in accordance with a type of a useful substance or a purpose of spraying.

### <Third aspect>

In the third aspect of the present embodiment, a composition for potentiating effects of a useful substance that comprises a useful substance (hereafter, may be referred to as "Composition 3") is applied to plants. Composition 3 may be prepared by diluting a concentrated composition immediately before mixing.

It is preferable that Composition 3 be sprayed on the aboveground part of a plant, and, in particular, on leaves. When Composition 3 is sprayed on the aboveground part of a plant, Composition 3 is sprayed, so that a biosurfactant is applied preferably in an amount of 2.5 to 100 g, and more preferably 5 to 50 g, relative to 10a of the plant cultivation area. Also, Composition 3 is sprayed, so that a phospholipid is applied preferably in an amount of 0.25 to 200 g, and more preferably 1.25 to 50 g, relative to 10a of the plant cultivation area. In addition, Composition 3 is preferably applied, so that the effective amount of a useful substance comprised in the composition would be applied to plants.

In the case of foliar application, the timing of spraying Composition 3 can be adequately changed in accordance with a type of a useful substance or a purpose of spraying.

### 3. Precursor composition of composition for potentiating effects of useful substance

The third embodiment of the present disclosure relates to a precursor composition used to prepare the composition of the first embodiment by dilution or mixing. The definitions of the terms used in the present embodiment are as defined in the first embodiment, unless there is any particular inconsistency.

A composition for potentiating effects of a useful substance prepared from a precursor composition may or may not comprise the useful substance described above. A precursor composition is roughly classified into 6 types of compositions described below.
Composition a: a composition comprising a biosurfactant at a concentration 10 to 50,000 times that of a composition for potentiating effects of a useful substance;
Composition b: a composition comprising a phospholipid at a concentration 10 to 50,000 times that of a composition for potentiating effects of a useful substance;
Composition c: a composition comprising a biosurfactant and a phospholipid each at a concentration 10 to 50,000 times that of a composition for potentiating effects of a useful substance;
Composition d: a composition comprising a biosurfactant and a useful substance each at a concentration 10 to 50,000 times that of a composition for potentiating effects of a useful substance;
Composition e: a composition comprising a phospholipid and a useful substance each at a concentration 10 to 50,000 times that of a composition for potentiating effects of a useful substance;
Composition f: a composition comprising a biosurfactant, a phospholipid, and a useful substance each at a concentration 10 to 50,000 times that of a composition for potentiating effects of a useful substance.

The precursor composition of the present embodiment is, for example, stored and transferred in the form of a precursor composition. At the time of use, the composition is diluted or mixed to prepare a composition for potentiating effects of a useful substance, and the resulting composition is applied to plants. In a certain aspect, Composition a, the phospholipid, and the useful substance described above are mixed or diluted to prepare a composition for potentiating effects of a useful substance. Alternatively, Composition a, Composition b, and the useful substance are mixed or diluted to prepare a composition for potentiating effects of a useful substance. Alternatively, Composition a and Composition e are mixed or diluted to prepare a composition for potentiating effects of a useful substance. Alternatively, Composition b, the biosurfactant, and the useful substance are mixed or diluted to prepare a composition for potentiating effects of a useful substance. Alternatively, Composition b and Composition d are mixed or diluted to prepare a composition for potentiating effects of a useful substance. Alternatively, Composition d and the phospholipid are mixed or diluted to prepare a composition for potentiating effects of a useful substance. Alternatively, Composition e and the biosurfactant are mixed or diluted to prepare a composition for potentiating effects of a useful substance. Alternatively, Composition f is diluted to prepare a composition for potentiating effects of a useful substance. Preferably, Composition f is diluted to prepare a composition for potentiating effects of a useful substance comprising the useful substance.

In another aspect, Composition a and the phospholipid are mixed or diluted to prepare a composition for potentiating effects of a useful substance. Alternatively, Composition a and Composition b are mixed or diluted to prepare a composition for potentiating effects of a useful substance. Alternatively, Composition b and the biosurfactant are mixed or diluted to prepare a composition for potentiating effects of a useful substance. Alternatively, Composition c is diluted to prepare a composition for potentiating effects of a useful substance. Preferably, Composition c is diluted to prepare a composition for potentiating effects of a useful substance that does not comprise the useful substance. An adequate aspect of the precursor composition can be selected in accordance with a type of a useful substance used, the conditions of the plants to which the composition is to be applied, and other conditions.

In the present embodiment, "dilution" is performed with the use of a diluent comprising the liquid carrier described above (e.g., water) and the like. The diluent used herein does not substantially comprise a substance associated with plant growth (except for water).

When a precursor composition comprises a biosurfactant, the content of the biosurfactant is preferably 50% by mass or lower, and more preferably 30% by mass or lower, based on 100% by mass of the precursor composition. In such a case, the content of the biosurfactant is preferably 0.5% by mass or more, and more preferably 1.0% by mass or more, based on 100% by mass of the precursor composition. When a precursor composition comprises a phospholipid, the content of the phospholipid is preferably 50% by mass or lower, and more preferably 30% by mass or lower, based on 100% by mass of the precursor composition. In such a case, the content of the phospholipid is preferably 0.05% by mass or more, and more preferably 0.1% by mass or more, based on 100% by mass of the precursor composition. When a precursor composition comprises an agriculturally acceptable carrier (preferably a liquid carrier, and more preferably water), the content of the carrier is preferably 20% by mass, and more preferably 40% by mass or more, based on 100% by mass of the precursor composition.

### Examples

The embodiments of the present disclosure are described in greater detail with reference to the following examples, although the present disclosure is not limited to these examples.

The term "surfactin" or "SF" used in the examples refers to sodium surfactin (product name: KANEKA Surfactin, Kaneka Corporation). The term "GSSG" stands for glutathione disulfide (oxidized glutathione). The term "DMPC" stands for dimyristoylphosphatidylcholine. The term "lecithin" refers to soybean lecithin (Nacalai Tesque, Inc.). The term "sophorolipid" refers to a substance prepared with reference to Journal of Oleo Science, 60, (5), pp. 267-273, 2011. The term "rhamnolipid" refers to a rhamnolipid produced by AGAE Technologies. The term "spreading agent" refers to Approach BI (Maruwa Biochemical Co., Ltd.), which is a spreading agent comprising, as a main ingredient, a synthetic surfactant. The term "PQ" stands for the paraquat dichloride standard (FUJIFILM Wako Pure Chemical Corporation). While a commercially available paraquat comprises a spreading agent, a paraquat consisting of a herbicide component (PQ) was used herein.

### [Experimental Example 1] Promotion of GSSG absorption (oxidized glutathione)

### [Experimental Example 1-1]

Culture soil was filled into a 25-hole cell tray and seeds of *Brassica chinensis komatsuna* (variety: Harunosenbatsua) were seeded at 3 grains/cell. Cultivation was performed in a glass greenhouse. After germination, strains were thinned to retain 1 strain in a cell. The test solutions (20 µl) each comprising the components at the concentration shown in Table 1 were applied to the fifth leaf of the *Brassica chinensis komatsuna* plants 22 days after seeding. The test solutions were prepared by dissolving the components in water. When a phospholipid (DMPC) was to be added, at the outset, a phospholipid was dissolved in water, and a biosurfactant was added to reach the given concentration therein.

The leaves were collected 24 hours after the application of the test solutions and introduced into 15-ml centrifuges. The leaf surfaces were washed with the addition of 5 ml of water. The wash solution was collected, and the glutathione content was measured by high-performance liquid chromatography (HPLC).

**[Table 1]**

| Test solution | 1 (control) | 2 | 3 | 4 | 5 | 6 | 7 | 8 |
|---|---|---|---|---|---|---|---|---|
| Surfactin | - | - | - | 500 | 100 | 500 | 100 | 50 |
| Sophorolipid | - | - | - | - | - | - | - | - |
| Rhamnolipid | - | - | - | - | - | - | - | - |
| DMPC | - | - | - | - | - | 250 | 50 | 25 |
| Spreading agent | - | 500 | 100 | - | - | - | - | - |
| GSSG | 850 | 850 | 850 | 850 | 850 | 850 | 850 | 850 |
| (µg/ml) | | | | | | | | |

| Test solution | 9 | 10 | 11 | 12 | 13 | 14 | 15 | 16 |
|---|---|---|---|---|---|---|---|---|
| Surfactin | - | - | - | - | - | - | - | - |
| Sophorolipid | 500 | 100 | 500 | 100 | | - | - | - |
| Rhamnolipid | - | - | - | - | 500 | 100 | 500 | 100 |
| DMPC | - | - | 250 | 50 | - | - | 250 | 50 |
| Spreading agent | - | - | - | - | - | - | - | - |
| GSSG | 850 | 850 | 850 | 850 | 850 | 850 | 850 | 850 |
| | | | | | | | | (µg/ml) |

Figure 1 shows the rate of GSSG absorption by leaves to which the test solutions were applied. The concentration shown in the figure indicates the concentration of a surfactant. In the figure, the alphabet characters "a" to "f" demonstrate that there was a significant difference between groups each indicated with a different alphabet character. That is, the significance level; i.e., the p-value, was found to be smaller than 0.05 (p < 0.05) by the Tukey's test.

As shown in Figure 1, substantially no solutions consisting of GSSG were absorbed by leaves; however, GSSG absorption was improved on the leaves to which the biosurfactant had been applied together with GSSG. It was also found that application of a biosurfactant in combination with DMPC would improve the rate of GSSG absorption to a significant extent and would yield the effects of promoting GSSG absorption equivalent to or higher than those achieved with the use of the spreading agent. With the use of a test solution supplemented with surfactin in combination with DMPC, in particular, the rate of GSSG absorption would be improved to a significant extent. In addition, a significantly high rate of absorption would be achieved compared with that achieved with the use of the existing spreading agent.

### [Experimental Example 1-2]

Lecithin was used as a phospholipid instead of DMPC to examine the effects of surfactin for promoting GSSG absorption in the same manner as in Example 1-1. Culture soil was filled into a 25-hole cell tray and seeds of *Brassica chinensis komatsuna* (variety: Harunosenbatsua) were seeded at 3 grains/cell. Cultivation was performed in a glass greenhouse. After germination, strains were thinned to retain 1 strain in a cell. The test solutions (20 µl) each comprising the components at the concentration shown in Table 2 were applied to the fifth leaf of the *Brassica chinensis komatsuna* plants 21 days after seeding. The test solutions were prepared by dissolving the components in water. When lecithin was to be added, at the outset, lecithin was dissolved in water, and surfactin or a spreading agent was added to reach the given concentration therein.

**[Table 2]**

| Test solution | 17 (control) | 18 | 19 | 20 | 21 | 22 |
|---|---|---|---|---|---|---|
| Surfactin | - | - | 500 | 500 | - | - |
| Lecithin | - | 250 | - | 250 | - | 250 |
| Spreading agent | - | - | - | - | 500 | 500 |
| GSSG | 850 | 850 | 850 | 850 | 850 | 850 |
| | | | | | | (µg/ml) |

Figure 2 shows the rate of GSSG absorption by leaves to which the test solutions were applied. In the figure, the alphabet characters "a" to "d" demonstrate that there was a significant difference between groups each indicated with a different alphabet character. That is, the significance level; i.e., the p-value, was found to be smaller than 0.05 (p < 0.05) by the Tukey's test.

As shown in Figure 2, substantially no solutions consisting of GSSG were absorbed by leaves; however, GSSG absorption was improved on the leaves to which surfactin, lecithin, or a spreading agent had been applied together with GSSG. In particular, application of surfactin in combination with lecithin was found to improve the rate of GSSG absorption to a significant extent, compared with application thereof by itself. Meanwhile, application of a spreading agent in combination with lecithin was found to show no difference in the absorption rate, compared with the absorption rate achieved with the addition of the spreading agent by itself.

### [Experimental Example 1-3]

The influence of the lecithin concentration on the effects of surfactin for promoting GSSG absorption was examined. Culture soil was filled into a 25-hole cell tray and seeds of *Brassica chinensis komatsuna* (variety: Harunosenbatsua) were seeded at 3 grains/cell. Cultivation was performed in a glass greenhouse. After germination, strains were thinned to retain 1 strain in a cell. The test solutions (20 µl) each comprising the components at the concentration shown in Table 3 were applied to the fifth leaf of the *Brassica chinensis komatsuna* plants 21 days after seeding. The test solutions were prepared by dissolving the components in water. When lecithin was to be added, at the outset, lecithin was dissolved in water, and surfactin was added to reach the given concentration therein.

**[Table 3]**

| Test solution | 23 (control) | 24 | 25 | 26 | 27 | 28 | 29 |
|---|---|---|---|---|---|---|---|
| Surfactin | - | 500 | 500 | 500 | 500 | 500 | 500 |
| Lecithin | - | - | 50 | 125 | 250 | 500 | 1000 |
| GSSG | 850 | 850 | 850 | 850 | 850 | 850 | 850 |
| | | | | | | | (µg/ml) |

Figure 3 shows the rate of GSSG absorption by leaves to which the test solutions were applied. In the figure, the alphabet characters "a" to "d" demonstrate that there was a significant difference between groups each indicated with a different alphabet character. That is, the significance level; i.e., the p-value, was found to be smaller than 0.05 (p < 0.05) by the Tukey's test.

As shown in Figure 3, the rate of GSSG absorption was found to be improved to a significant extent when surfactin and lecithin in an amount of 0.1 to 2.0 times greater than the amount of surfactin were added, compared with the rate of GSSG absorption achieved with the addition of surfactin by itself.

### [Experimental Example 2] Promotion of herbicide effects

### [Experimental Example 2-1]

Culture soil was filled into 9-cm vinyl pots, and soybean seeds (the variety: Fukuyutaka) were seeded at 3 grains/pot. Cultivation was performed in a glass greenhouse, and, after germination, strains were thinned to retain a strain in a pot. The test solutions shown in Table 4 were sprayed on leaves 3 seeks after seeding. The test solutions were prepared by dissolving the components in water. The SPAD (soil and plant analyzer development) values of the leaves were measured using a chlorophyll meter (product name: SPAD-502Plus, Konica Minolta, Inc.) 3 days after application of the test solutions. The SPAD values are used as the indicators showing the chlorophyll amount of plants.

**[Table 4]**

| Test solution | 30 (control) | 31 | 32 | 33 |
|---|---|---|---|---|
| Surfactin (SF) | - | - | 0.001 | 0.001 |
| Lecithin | - | - | - | 0.0005 |
| PQ | - | 0.001 | 0.001 | 0.001 |
| | | | | (mass%) |

Figure 4 shows the SPAD values of the leaves to which the test solutions were applied. As shown in Figure 4, the SPAD values of the leaves to which PQ had been exclusively applied were not substantially different from the SPAD values of the control, although the SPAD values were lowered with the application of PQ together with surfactin. In addition, the addition of surfactin in combination with lecithin was found to further lower the SPAD values; i.e., lower the photosynthetic capacity of plants. The results demonstrate that use of surfactin in combination with lecithin would potentiate the herbicidal effects of PQ.

### [Experimental Example 2-2]

Culture soil was filled into 9-cm vinyl pots, and soybean seeds (the variety: Fukuyutaka) were seeded at 3 grains/pot. Cultivation was performed in a glass greenhouse, and, after germination, strains were thinned to retain a strain in a pot. The test solutions shown in Table 5 were sprayed on leaves 3 seeks after seeding. The test solutions were prepared by dissolving the components in water. When lecithin was to be added, at the outset, lecithin was dissolved in water, and a biosurfactant was added to reach a given concentration. The SPAD values of the leaves were measured using a chlorophyll meter 3 days after application of the test solutions.

**[Table 5]**

| Test solution | 34 (control) | 35 | 36 | 37 | 38 | 39 | 40 | 41 |
|---|---|---|---|---|---|---|---|---|
| Surfactin (µg/ml) | - | - | 500 | 500 | - | - | - | - |
| Sophorolipid (µg/ml) | - | - | - | - | 500 | 500 | - | - |
| Rhamnolipid (µg/ml) | - | - | - | - | | | 500 | 500 |
| Lecithin (µg/ml) | - | 250 | - | 250 | - | 250 | | 250 |
| PQ (µM) | 100 | 100 | 100 | 100 | 100 | 100 | 100 | 100 |

Figure 5 shows a rate of SPAD decrease of the leaves to which the test solutions were applied, relative to the SPAD value of the leaves to which PQ had been selectively applied, which is designated as 100. As shown in Figure 5, the SPAD values were found to be decreased to a significant extent when the biosurfactant was applied in combination with lecithin, compared with the case when lecithin or the biosurfactant had been applied by itself. The results demonstrate that use of biosurfactants in combination with lecithin would potentiate the herbicidal effects of PQ.

The upper limits and/or the lower limits of the numerical ranges indicated herein can be used in any combination to define a preferable range. For example, the upper limit and the lower limit, the upper limits, or the lower limits of numerical ranges may be used in any combination to define a preferable range. The numerical range indicated with the preposition "to" includes numeral values before and after the preposition "to" as the lower limit and the upper limit, respectively.

The embodiments of the present disclosure were described in detail above. It should be noted that specific constitutions are not limited to the embodiments and that design modification implemented without departing from the scope of the present disclosure are within the scope of the present disclosure.

All publications, patents, and patent applications cited herein are incorporated herein by reference in their entirety.

## Claims

1. A composition for potentiating effects of a useful substance in a plant, which comprises at least one type of a biosurfactant selected from among peptide-based biosurfactants and sugar-based biosurfactants and a phospholipid.

2. The composition for potentiating effects of a useful substance according to claim 1, which comprises the biosurfactant in an amount of 0.001 to 0.1% by mass based on 100% by mass of the composition.

3. The composition for potentiating effects of a useful substance according to claim 1, which comprises the phospholipid in an amount of 0.0005 to 0.1% by mass based on 100% by mass of the composition.

4. The composition for potentiating effects of a useful substance according to claim 1, wherein the ratio of the content of the biosurfactant to the content of the phospholipid is 1:0.01 to 1:5 by mass.

5. The composition for potentiating effects of a useful substance according to claim 1, wherein the useful substance is an organic compound, which is at least one substance selected from the group consisting of a herbicide, a plant growth regulator, a functional fertilizer component, a bactericide, and a pesticide.

6. The composition for potentiating effects of a useful substance according to claim 5, wherein the useful substance is glutathione.

7. The composition for potentiating effects of a useful substance according to claim 1, which further comprises a useful substance.

8. The composition for potentiating effects of a useful substance according to claim 1, wherein the biosurfactant is at least one biosurfactant selected from among surfactin, rhamnolipid, sophorolipid, and a salt of any thereof.

9. The composition for potentiating effects of a useful substance according to claim 1, which is used for foliar application.

10. A precursor composition of a composition for potentiating effects of a useful substance, which is used for preparing the composition for potentiating effects of a useful substance according to any one of claims 1 to 8 by dilution or mixing.

11. The precursor composition according to claim 10, which comprises the biosurfactant in an amount of 0.5 to 50% by mass based on 100% by mass of the precursor composition.

12. The precursor composition according to claim 10, which comprises the phospholipid in an amount of 0.05 to 50% by mass based on 100% by mass of the precursor composition.
